# EUROPEAN PATENT APPLICATION

(11) **EP 0 759 550 A1**
(43) Date of publication of application: **26.02.1997**
(21) Application number: 96111633.2
(22) Date of filing: 18.07.1996
(51) Int. Cl.: G01N 27/04, G01N 27/22

(54) **Moisture measuring apparatus for bulk grain and the like**

(30) Priority: 21.08.1995 GB 9517096
(71) Applicant: PROTIMETER PLC, Marlow, Buckinghamshire SL7 1LX (GB)
(72) Inventor: Dadachanji, Fali Minocher, Marlow, Buckinghamshire SL7 2DE (GB)
(74) Representative: Lesley, Sheila F.

(57) **Abstract**

Moisture measuring apparatus for bulk grain or other granular material comprises a probe (10) incorporating a plurality of parallel elongate rod-like electrodes (12, 14). In use, the probe is thrust longitudinally into a heap of grain or other granular material and the electrical resistance or capacitance between a central electrode (12) and peripheral electrodes (14) is measured by circuitry which provides an indication of the moisture content of the bulk granular material based on the measured resistance or capacitance. The probe includes a streamlined structure (16), at the head of the probe (10), which connects the leading ends of the electrodes and makes the probe easy to insert into and withdraw from the grain heap. The probe further has a handle (22) at its tail end to facilitate insertion of the probe into and withdrawal of the probe from the grain heap and rotation of the probe about a longitudinal axis in the grain heap.

## Description

THIS INVENTION relates to apparatus for measuring the moisture content of grain or other granular material in bulk, for example in a heap of such material. The term "granular material" as used herein is also intended to cover materials made up of particles so fine that the material would normally be regarded as a powdered material.

Measurement of the moisture content of grain and other granular materials in bulk, for example in a heap, is traditionally carried out either by removing a sample from the bulk of the material using any of a variety of mechanical devices and subsequently measuring the moisture content of the sample, or by using an electrical device inserted into the bulk material, the device usually being in the form of two metal plates which make up to electrodes of an electrical measuring system. The grain falls in the gap between the two plates and the electrical resistance or capacitance between the plates is measured and the measurement converted to moisture content using a known correlation between the two parameters. However, known devices of this type can be extremely difficult to push deep into the bulk material, for example into a grain heap, because of the friction between the grain and the electrode plates.

It is an object of this invention to provide an improved apparatus for measuring the moisture content of grain or other granular or powdered materials in the bulk.

According to the invention there is provided moisture measuring apparatus for bulk grain or other granular material, including a probe comprising a plurality of parallel elongate rod-like electrodes, the probe being adapted to be thrust longitudinally into a heap or other volume of grain or other granular material, the apparatus including means for measuring the electrical resistance or capacitance between at least one said electrode and another said electrode and for providing therefrom an indication of the moisture content of the bulk granular material.

An embodiment of the invention is described below by way of example, with reference to the accompanying drawings, in which:-
FIGURE 1 is a perspective view of a probe forming part of a moisture-content-measuring apparatus in accordance with the invention,
FIGURE 2 is a schematic cross-sectional view of the probe of Figure 1,
FIGURE 3 is a schematic view similar to Figure 2 but showing the probe embedded in bulk grain, and
FIGURE 4 is a schematic side elevation view showing apparatus in accordance with the invention in use.

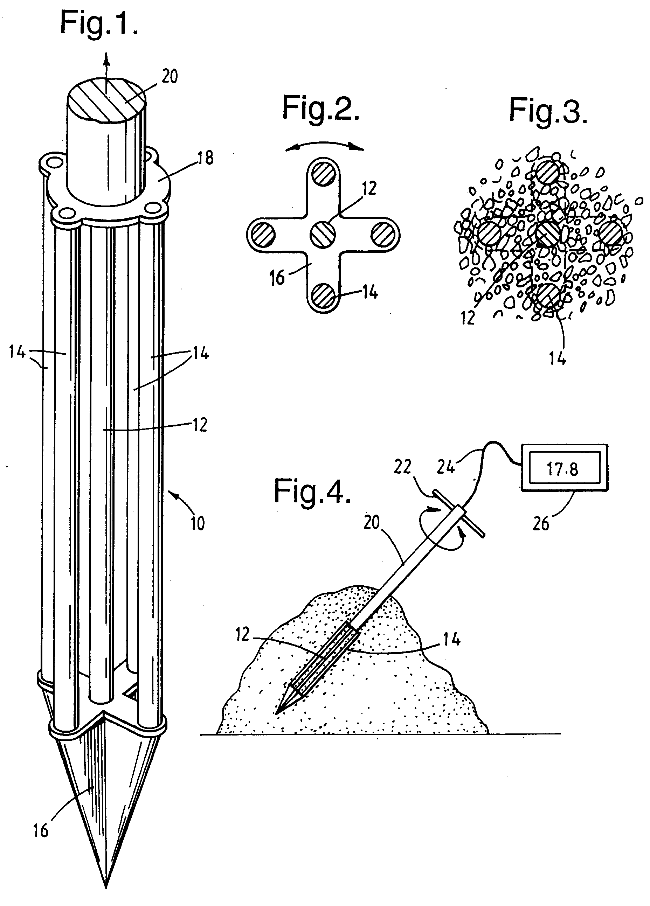

Referring to Figures 1 and 2, a sensing probe 10 for apparatus embodying the invention comprises five elongate electrodes, namely a central electrode 12 and four peripheral electrodes 14 parallel with the central electrode 12, spaced equally from the central electrode 12 and spaced at equal angular intervals from one another about the central electrode 12. The electrodes 12, 14 are conveniently in the form of straight, round section metal rods or tubes. At a leading end of the probe, a streamlined pointed nose structure 16 provides a physical connection, which is nevertheless electrically non-conductive, between the leading ends of rods 12, 14. At the opposite trailing end of the probe, a structure 18 similarly provides an electrically non-conductive, physical connection between the rear or trailing ends of the electrodes 12, 14 and is also connected with a handle shaft 20 co-axial with the central rod 12. If desired, the central electrode may act as an earth electrode and may be integral with the shaft 20, the structure 18 in this case taking the form of a collar through which the integral body comprising shaft 20 and electrode 12 extends.

The nose structure 16 may, as shown, comprise, in effect, four generally triangular vanes, each of a thickness corresponding to the diameter of the electrodes 12, 14, the vanes extending in planes containing the longitudinal axis of the probe and uniting with one another along a region extending along the longitudinal axis of the probe, the vanes being disposed at 90° intervals around said axis so that in cross-section the nose structure is of cruciform shape (cf. Figures 2 and 3). The nose structure 16 thus parts the grain mass ahead of the electrodes 12, 14 as the probe is pushed, nose-first, into a heap of grain, whilst itself presenting minimal resistance to such insertion. In the preferred embodiment, the central electrode 12 forms one "plate" of a capacitor whilst the electrodes 14 are electrically interconnected and form the other "plate" of the capacitor. Electrical circuitry (not shown but known *per se*) connected with this capacitor is operable to measure the capacitance and/or dielectric loss of this capacitor, which is, of course, dependent on the properties of the medium filling the space between the electrode 12 and the electrodes 14, and, in particular, where this space is occupied by grain or some other granular material of known type, depends upon the moisture content of the granular material. By calibration of the instrument against bodies of the particular granular material of interest, for example wheat, at different moisture contents, it is possible to determine a correlation between measured capacitance and moisture content. Normally the apparatus will be arranged to present the result of the measurement, in a body of the granular material of previously unknown moisture content, as a moisture content on an appropriate analogue or digital display.

Preferably, as indicated, the sensor probe acts as a capacitor, and in this event the electrodes 12, 14 may have an electrically insulating coating. However, the apparatus may be arranged to measure the electrical resistance between the central electrode 12 and electrodes 14 for example, and in such a case the metal surfaces of the electrodes may be exposed.

As shown in Figure 4, the handle shaft 20 carries at its end remote from the electrodes a cross-bar 22 to assist in rotation of the probe about its longitudinal axis. The electrodes 12, 14 may be connected with electrical leads, not shown, which extend within a longitudinal passage within shaft 20 to a flexible cable 24 extending from the end of shaft 20 remote from the electrodes to a casing 26 housing electronic metering and display circuitry driving a digital or electronic display on the housing.

In use of the apparatus, the probe is pushed longitudinally, nose-first, into the grain to the depth required as illustrated in Figure 4, with the handle end of the shaft 20 projecting from the heap. The probe can then be turned axially, as shown in Figure 4, using the cross-bar 22 with which the handle is provided, allowing the grain to flow between the rods 12, 14 and fill up all the voids which may have been left during the insertion. The outer rods constitute an "outer" electrode, the central rod makes up the second and central electrode. The capacitance between the inner and outer rods is dictated mostly by the amount and the moisture content of the material between the electrodes.

As shown in Figure 4, the capacitance of the arrangement is measured and displayed as moisture content by metering and display circuitry with the casing 26, and driving the digital or analog display mounted on the casing. A number of variations can be made to the above arrangement, for example, all the rods can be insulated from one another and connected individually to the metering circuitry, which may operate to measure the capacitance between separate pairs of rods and may integrate the resulting readings to derive a single average reading of capacitance (converted to moisture content).

It will be appreciated that in variants fewer or more than four parallel outer rods 14 may be arranged around the central rod, with the nose structure 16 having correspondingly fewer or more fins. The rods 12, 14 need not, of course, be round, but may be of any convenient cross-section.

The embodiment of the invention described with reference to the drawings has the following advantages of known apparatus.
(a) The probe is more easily pushed into grain and granular materials than most known arrangements;
(b) The arrangement of electrodes can be inserted at various depths in the grain bulk allowing a number of readings to be taken and averaged;
(c) The rotation of the probe in the bulk grain after insertion removes any air gaps or voids in the material, and allows the material to flow around the electrodes;
(d) The probe construction is inherently robust and inexpensive.

The features disclosed in the foregoing description, in the following claims and/or in the accompanying drawings may, both separately and in any combination thereof, be material for realising the invention in diverse forms thereof.

## Claims

1. Moisture measuring apparatus for bulk grain or other granular material, including a probe comprising a plurality of parallel elongate rod-like electrodes, the probe being adapted to be thrust longitudinally into a heap or other volume of grain or other granular material, the apparatus including means for measuring the electrical resistance or capacitance between at least one said electrode and another said electrode and for providing therefrom an indication of the moisture content of the bulk granular material.

2. Apparatus according to claim 1 wherein said probe includes a streamlined structure, at a leading end of the probe, providing a physical connection between the leading ends of said electrodes and adapted for easy entry into and withdrawal from a body of bulk granular material.

3. Apparatus according to claim 1 or claim 2 wherein said probe has structure at a trailing end thereof providing a physical connection between the trailing ends of said electrodes and incorporating a handle to facilitate insertion of the probe into and withdrawal of the probe from a body of granular material and rotation of the probe about a longitudinal axis thereof.

4. Apparatus according to any preceding claim wherein said probe comprises a central said electrode extending along a longitudinal axis of the probe, and an array of further said electrodes, spaced apart at intervals around said central electrode.
